# EUROPEAN PATENT SPECIFICATION

(11) **EP 2 588 721 B1**
(45) Date of publication and mention of the grant of the patent: **19.10.2016**
(21) Application number: 11743677.4
(22) Date of filing: 28.06.2011
(51) Int. Cl.: F01N 3/022, B01D 46/52, B01D 46/00, F01N 3/027, B01D 46/24

(54) **INTEGRATED DIESEL PARTICULATE FILTER**
INTEGRIERTER DIESEL-PARTIKELFILTER
FILTRE À PARTICULES DIESEL INTÉGRÉ

(30) Priority: 01.07.2010 US 360655 P; 16.07.2010 US 364862 P
(43) Date of publication of application: 08.05.2013
(73) Proprietor: Rypos, Inc., Franklin, MA 02038 (US)
(72) Inventor: IBRAHIM, Osama, Cornelius NC 28031 (US); PETER, Klaus, Natick MA 01760 (US); LOREN, Noah, Waban MA 02468 (US); WILLEY, Peter, Rumford RI 02916 (US); NARDI, Zachary, Smithfield RI 02917 (US); SAEID, Amin, Philadelphia PA 19149 (US); SWENSON, John, Hudson MA 01749 (US); MCDONALD, James, Forest Grove PA 18922 (US)
(74) Representative: Hofstetter, Schurack & Partner
(86) International application number: PCT/US2011/042163
(87) International publication number: WO 2012/003183

(56) References cited:
- EP-A1- 0 657 631
- WO-A1-03/002854
- DE-A1-102008 038 821
- US-A1- 2003 196 419

## Description

### BACKGROUND OF THE INVENTION

The present disclosure relates to an electrically cleaned or maintained emissions control device, and specifically to a regenerable filter construction for removing particulate matter (PM) from combustion exhaust gases. Further, the present disclosure relates to electric load banks for Electric Power Systems (EPS).

WO 03/002854 A1 discloses a method of desulfation of NOx-adsorbers in a diesel exhaust system, comprising the steps of periodically increasing the temperature of the electrically conductive substrate of the NOx-adsorber above the decomposition temperature of the adsorbed S-comprising compounds by providing electric current to the electrically conductive substrate. EP 0 657 631 A1 is directed to a diesel particulate filter in which particulates are trapped in thin filter plates that are separate and distinct from a latticed heating wire that conducts the electrical current used for heating. US 2003/196419 A1 discloses a diesel particulate filter construction for filtering particulate from a flow of exhaust, includes a first layer of electrically resistive metal filter material in line with the flow of exhaust with particulate therein and a second layer of electrically resistive filter material which is also in line with the flow of exhaust with particulate therein.

Federal and state environmental laws and regulations require that certain harmful substances, including PM and gaseous pollutants, be removed from the exhaust of internal combustion engines. States and localities also limit the noise emitted by the engines. To achieve the required reduction of both pollution and noise, the exhaust systems of internal combustion engines must include a series of separate emission control devices, in addition to a separate silencer to control noise. One device removes PM, another removes gaseous pollutants, and often a third device heats the exhaust to a temperature required for the treatment devices to work. The need to use several such devices in combination adds to the cost and complexity of the exhaust treatment systems required to comply with environmental regulations.

Backup generator sets are a type of EPS that frequently incorporate diesel engines and supply a normal service load only in emergencies that interrupt the ordinary supply of electric power from public utilities. Under typical, non-emergency conditions the backup generator set may be operated for only an hour each month to test its ability to start and run under no load. According to engine manufacturers, operating a diesel engine only at loads less than 10% to 50% of rated load causes harm to the engine. To avoid this harm, EPS operators must connect artificial loads known as load banks to the electrical output of the EPS to dissipate at least 10% to 50% of rated load.

EPS are also used to produce power to propel diesel-electric locomotives and other vehicles in on-road and off-road applications. Under no-load and braking conditions, the electric motors in these applications generate excess electrical energy that must be safely dissipated to avoid overheating damage to the electric motors. Diesel-electric vehicles must be designed with load banks to dissipate the excess energy.

In view of the foregoing, there is a demand for an electrically cleaned and/or maintained emissions control device that can remove particulate matter from combustion exhaust gases.

There is a further demand for an emissions control device that can sufficiently load the output of an electrical power system (EPS) to prevent harm to the EPS engine during EPS operation at low or no service load.

There is yet another demand for an emissions control device that can safely dissipate excess electrical energy created by an electrical motor under no-load and braking conditions to avoid overheating damage to the electrical motor.

### SUMMARY OF THE INVENTION

The present invention preserves the advantages of prior art electric load banks for Electric Power Systems. In addition, it provides new advantages not found in currently available electric load banks for Electric Power Systems and overcomes many disadvantages of such currently available electric load banks for Electric Power Systems.

The invention is generally directed to a novel and unique apparatus for dissipating energy into the exhaust gas of an internal combustion engine and includes a housing for confining a flow path for exhaust gas from an internal combustion engine where the housing has an inlet and an outlet, such that the exhaust gas flows from the inlet to the outlet, and a cartridge housing formed by two annular end plates, a perforated cylindrical outer-wall and perforated cylindrical inner wall. A porous, electrically conductive mesh is placed in the cartridge housing such that exhaust gas can flow in through the perforations in the cylindrical outer wall (315), through the conductive mesh, and out through the perforations in the cylindrical inner wall, said conductive mesh trapping the particulate matter carried by the exhaust gas. At least two electrical terminals are in permanent electrical contact with the conductive mesh. An electrical power supply completes one or more electrical circuits through the conductive mesh with the power supply having two or more electrical outputs electrically connected to an equal number of electrical terminals on the conductive mesh. The apparatus provides a filter, heater, electrical load and silencer, a plurality of cartridge housings that are arranged inside the housing, each of the cartridges containing a section of electrically conductive mesh, and means for electrically insulating each section of conductive mesh from the cartridge housing surrounding that section. Two conductive tabs are attached to each cartridge housing, each tab making electrical contact with one electrical terminal on the conductive mesh. The apparatus also comprises means for electrically insulating each conductive tab from its respective cartridge housing.

The invention is also directed to a use of such apparatus, comprising the steps of driving a generator with the mechanical output of the internal combustion engine, conducting the electrical output of the generator to the electrical terminals of the conductive mesh, electrically heating the conductive mesh, controlling the electrical potential across the electrical terminals, thereby varying the flow of electricity through the conductive mesh, and dissipating a selectable amount of power in the conductive mesh.

It is therefore an object of the present invention to provide an emissions control device that can remove particulate matter from combustion exhaust gases.

The details of one or more embodiments of the invention are set forth in the accompanying drawings and the description below. Other features, objects, and advantages of the invention will be apparent from the description and drawings, and from the claims.

### BRIEF DESCRIPTION OF THE DRAWINGS

The novel features which are characteristic of the present invention are set forth in the appended claims. However, the invention's preferred embodiments, together with further objects and attendant advantages, will be best understood by reference to the following detailed description taken in connection with the accompanying drawings in which:
Fig. 1 is a block diagram of an exemplary electrical power system in which multiple independent devices remove pollutants and silence the exhaust.
Fig. 2 is a block diagram of a an exemplary apparatus that is capable of simultaneously filtering, heating, and silencing exhaust while dissipating electrical load;
Fig. 3 is a front perspective view of an exemplary cartridge in accordance with this version of the present invention:
Fig. 4 is a top perspective view of the cartridge of Fig. 3 with the upper of the two end plates removed for illustration purposes:
Fig. 4A is a close-up perspective view of the tabs that extend through the outer insulating block of the cartridge of Fig. 3;
Fig. 5 is a block diagram of an exemplary electrical power supply delivered to the cartridge of this version of the present invention;
Fig. 6 is a front perspective view of a number of cartridges of this version of the present invention arranged into a number of exemplary stacks;
Fig. 7 is a perspective view of an exemplary stack of cartridges of this version of the present invention;
Fig. 8 is a diagram of an exemplary series circuit;
Fig. 9 is a diagram of an exemplary wye circuit configuration;
Fig. 10 is a diagram of an exemplary delta circuit configuration; and
Fig. 11 is a block diagram of an exemplary system configuration that prevents the energizing of more than one of two stacks in an exemplary filter module.

### DETAILED DESCRIPTION OF THE PREFERRED EMBODIMENT

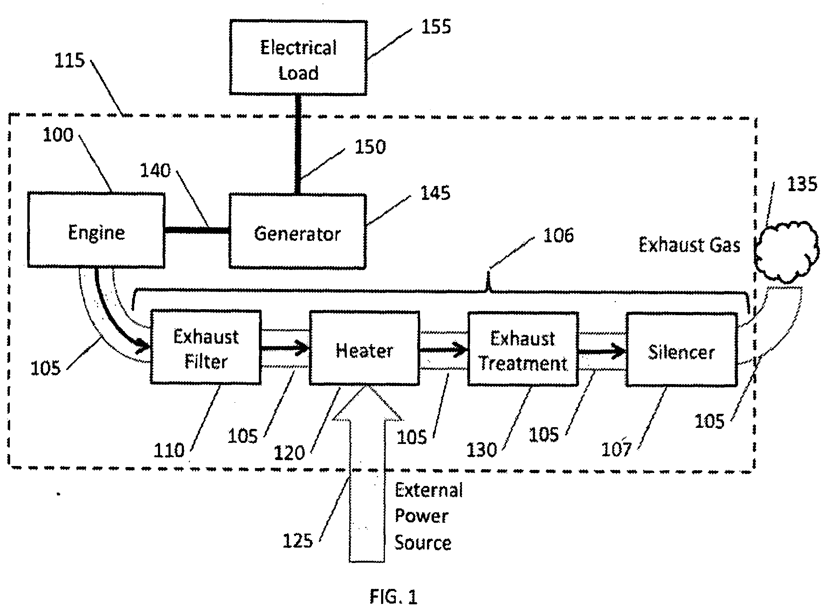

Referring to FIG. 1, the normal operation of an exemplary internal combustion engine 100 creates exhaust gas 135 that contains harmful pollutants including, but not limited to, particulate matter (PM), hydrocarbons (HC), nitrogen oxides (NOx), carbon monoxide (CO), engine lubricating oil, and unburned fuel. To reduce the dangers of exhaust gas 135 to human health, the United States Environmental Protection Agency (EPA) and state agencies regulate the pollutants emitted by the internal combustion engine 100. To comply with EPA and state environmental regulations, the manufacturer or operator of an internal combustion engine 100 may, for example, be required to install in the exhaust flow path 106 an exhaust filter 110 to remove particulate matter and an auxiliary exhaust treatment device 130 to remove gaseous pollutants from the exhaust gas. In some applications a heater 120 is required to ensure that the temperature of the exhaust gas 135 is sufficient for the auxiliary exhaust treatment device 130 to operate effectively. In addition, the exhaust flow path 106 typically includes a silencer 107 that reduces exhaust noise. The silencer 107 and the emission control devices are connected in series to each other and to the exhaust manifold of the engine 100 by segments of tubular metal exhaust pipe 105.

In an exemplary electric power system 115, the engine 100 is a diesel engine that transfers power to a generator 145 through a mechanical coupling 140. The generator 145, in turn, transfers electrical power to an electrical load 155 through an electrical cable or other electrical connection 150. In a typical application, the electrical power system 115 is a standby generator that provides power to a hospital, industrial plant, or other critical facility in the event that power from ordinary sources is interrupted in an emergency. When the standby generator is operating during an emergency, the electrical load 155 will comprise all the electrically powered equipment in the critical facility, which typically will require a large fraction of the rated electrical power output of the generator.

Operating an internal combustion engine at load levels below 10% to 50% fails to raise the engine and engine exhaust gas temperature sufficiently to prevent the accumulation of damaging compounds in the engine crankcase. Diesel engines operated at low load experience a damaging carbon buildup on internal components and an accumulation of unburned fuel and lubricating oil known as wet stacking. For these reasons, it is necessary to provide a minimum electrical load 155 for the electric power system 115 during all modes of operation. For example, a standby generator must also be operated periodically during nonemergency conditions when it is not powering the critical facility to test its ability to start and supply electricity. During such testing, the electrical load 155 typically includes an electric load bank capable of dissipating into the atmosphere 10% to 30% of the rated power output of the standby generator 145. An electric load bank is made up of high power ballast resistors and fans to force air past them.

In another typical application, the electrical power system 115 may produce electricity to power the electric motors that propel a locomotive or an on- or off-road vehicle. Regenerative braking systems on these applications use the electric motors to slow the vehicle by generating electricity during braking. The resulting surplus electricity must be safely dissipated into the atmosphere using an electric load bank as the electrical load 155. The surplus electricity would otherwise feed back into the electrical power system and damage it.

At the same time the electric power system 115 is dissipating excess electrical power into the environment, it may also require an external source of power 125 for a heater 120 needed to raise the temperature of the exhaust gas 135 to a temperature sufficient to allow the auxiliary exhaust treatment device 130 to work. For example, the auxiliary exhaust treatment device 130 may be a Selective Catalytic Reduction (SCR) system that removes NOx from the exhaust gas 135. An SCR is fully effective only when the exhaust temperature at its inlet is between 250°C and 500°C. The heater 120 typically raises the temperature of the exhaust gas 135 flowing through it by using electric power to heat resistive elements in the exhaust gas 135 or by burning added fuel in the exhaust gas 135.

Thus, an electric power system 115 generally may require a separate exhaust filter 110, heater 120, auxiliary exhaust treatment 130, silencer 107, and electrical load 155 to operate within the emissions requirements of state and federal law and to allow for routine testing.

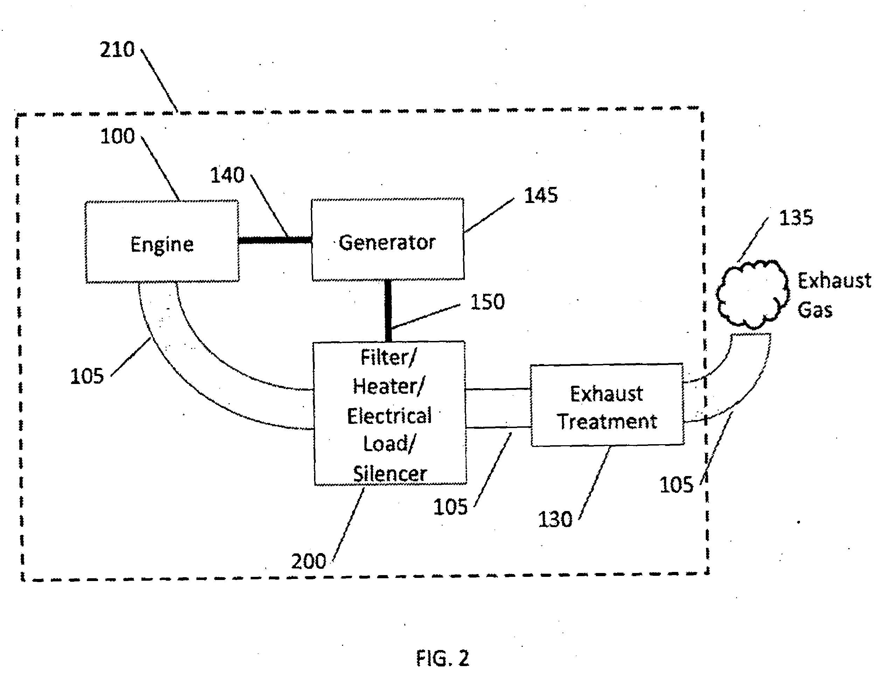

Referring to FIG. 2, one version of the present invention 200 is capable of simultaneously filtering, heating, and silencing the exhaust while dissipating electrical load in the exhaust gas 135. The apparatus 200 thus combines the functions of multiple devices that are necessary to operate and maintain the electric power system 210, thereby saving space in often tight engine enclosures, reducing power consumption, reducing system complexity, and providing functional improvements.

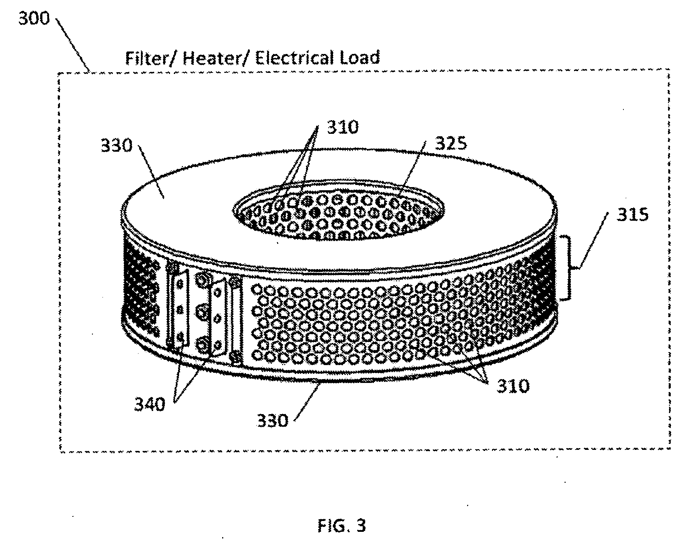

Referring to FIG. 3, a cartridge 300 is one example of the present invention. The cartridge 300 combines the functions of a filter, heater, silencer, and load bank in a small package. The cartridge contains the flow of exhaust between two annular end plates 330. Exhaust gas can flow into the cartridge 300 through perforations 310 in the cylindrical outer wall 315, which in that case forms an inlet. The exhaust gas flows in radial, axial, and azimuthal directions within the cartridge 300, but the average overall flow is radial between the outer wall 315 and the inner wall 325. Exhaust gas flows out of the cartridge through perforations 310 in the inner cylindrical wall 325, which in that case forms an outlet. In some applications, it is advantageous to reverse the direction of exhaust gas flow through the cartridge 300.

The end plates 330, the outer wall 315, and the inner wall 325 together form the outermost structure of a substantially continuous, perforated metal cartridge housing 300. The cartridge 300 contains an electrically conductive mesh capable of heating and filtering the exhaust.

The end plates 330, the outer wall 315 and the inner wall 325 are made of material that retains its strength and resists corrosion while heated to temperatures up to 1100 degrees Celsius in the presence of hot exhaust gas. Stainless steel and enamel-coated carbon steel are suitable for this purpose. External electrical connections to the electrically conductive mesh contained in the housing 300 are accomplished using heat and corrosion resistant metal tabs 340, which may be made of nickel.

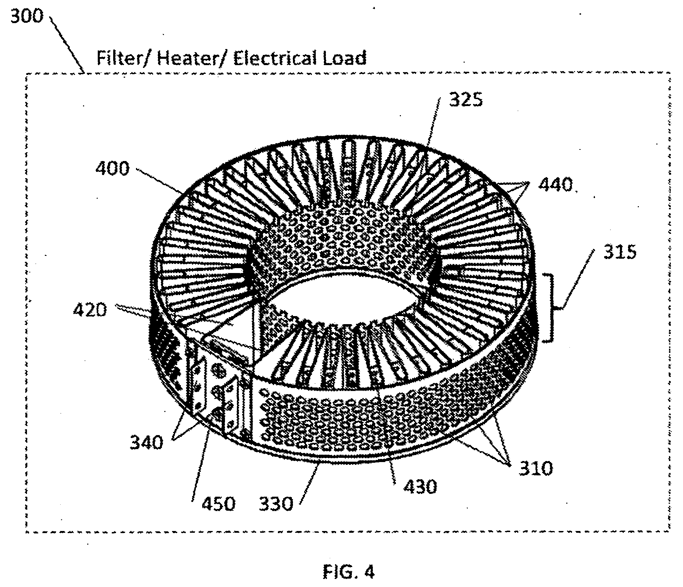

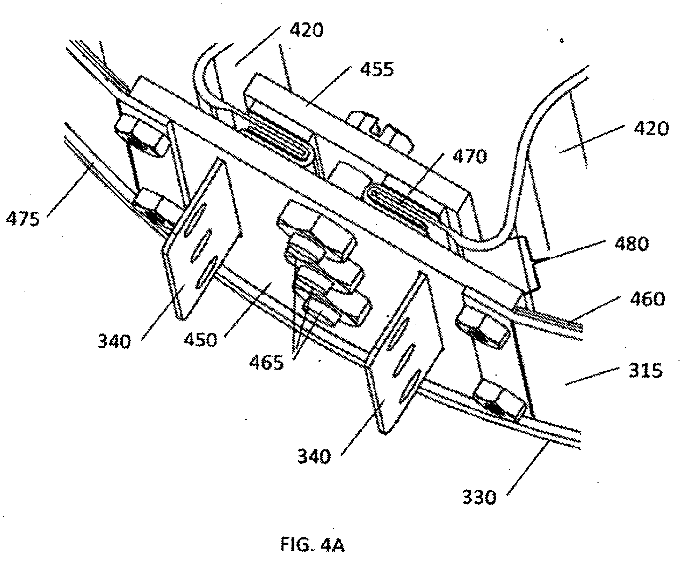

Referring to FIG. 4, the cartridge 300, shown without the upper of two end plates 330 for purposes of illustration, contains a porous, electrically conductive mesh 400 that completely separates the outer wall 315 from the inner wall 325. The mesh 400 is solidly attached at its top and bottom edges, along its entire length, to the inner surfaces of both end plates 330 using a high temperature, electrically insulating cement such as Sauereisen electric resistor cement No. P-78 made by Sauereisen Cement Company. The resistor cement performs the dual functions of securing the mesh 400 and electrically insulating it from the end plates 330. Because the mesh 400 is attached to and sealed against the end plates 330, all of the exhaust gas flowing through the cartridge 300 from inlet to outlet is forced to flow through the mesh 400.

The mesh 400 must resist oxidation, corrosion, and other chemical reactions while heated to temperatures up to 1100 degrees Celsius in the presence of hot exhaust gas. Woven metal fabric and sintered metal fiber fabric may inherently resist corrosion in hot exhaust gas or may be treated with coatings such as aluminum oxide to achieve this resistance. The mesh 400 may in some versions be 1 mm to 2 mm thick, which thickness provides depth to trap and hold larger quantities of soot than a thinner mesh. Typically, the mesh 400 will hold 25 grams of soot per m² of mesh area. In one example, the mesh 400 is made of a sintered metal fiber fabric as described in U.S. Patent No. 6,942,708.

The exemplary mesh 400 is formed in a long ribbon arranged in a serpentine pattern of pleats 440 in the cartridge 300 to increase the total surface area of the mesh 400 in the cartridge 300. The ends of the mesh 400 form two electrical terminals 420 that are electrically connected to exemplary tabs 340 that protrude through an insulating block 450 to provide a means of electrical connection to the mesh 400. The insulating block 450 may be made of mica or a mica laminate to electrically insulate the tabs 340 from the outer wall 315 and end plates 330. Direct or alternating current sources of electricity may be connected to the two tabs 340 of the cartridge 300, or more generally to two or more electrical terminals 420 of the mesh 400. When a voltage is applied across the tabs 340, current flows through the resistance of the mesh 400, heating the mesh 400 and the exhaust gas flowing through it, thereby dissipating electrical energy into the exhaust gas.

An exemplary mesh 400 made of sintered metal fiber fabric incorporates fibers having diameters ranging from 15 µm to 40 µm, which present a large fiber surface area for a given area of mesh 400. The mesh 400 thereby provides a large coefficient of heat transfer to the exhaust and a low thermal mass. As a result of these combined properties, the mesh 400, when energized, heats the exhaust gas very efficiently.

The sintered metal fiber fabric may itself be comprised of a plurality of layers, each layer made of fibers of uniform diameter. In each successive layer in the direction of exhaust flow, the fiber diameter of the fibers may be less than the in the previous layer. This exemplary construction permits the fabric to efficiently trap and remove particulate matter from exhaust gas using the full thickness of the fabric.

In one version of the present invention, the mesh 400 may be coated with an oxidation catalyst including without limitation platinum, vanadium, or palladium. The catalyst coating reduces the temperature at which any soot trapped by the fabric is oxidized. In some versions of the invention, the temperature of the exhaust gas, as heated by electrical energy dissipated by the mesh 400, will be sufficient to oxidize soot trapped in the mesh 400, thereby cleaning the mesh 400.

In another version, the mesh 400 may be coated with a selective catalytic reduction (SCR) catalyst that removes nitrogen oxides from the exhaust. Suitable SCR catalysts include the EnviCat^{®} Yellow, Red, and Blue Lines manufactured by Süd-Chemie. Electrically heating the catalyst-coated mesh 400 reduces the time from engine start until the SCR substrate reaches its minimum operating temperature. Typical, unheated SCR substrates may require 20 to 60 minutes of heating by the exhaust alone to reach a minimum operating temperature of 250°C. The electrically heated mesh 400 can reach operating temperature in as little as a few minutes.

When the exhaust flow is from the outer wall 315 to the inner wall 325, the exhaust pressure tends to collapse the pleats 440 so that the folds of the pleats at the outer diameter of the cartridge become narrower. Left unchecked, the collapse of the pleats 440 reduces the surface area through which exhaust gas can flow and also reduces to the electrical resistance of the mesh strip. An exemplary stent 430 is one means to prevent exhaust pressure from deforming the mesh 400 and collapsing the pleats 440. The stent 430 may be made of a high temperature insulator, such as perforated or solid mica or mica laminate. Other embodiments of the cartridge 300 may prevent deformation of the mesh 400 by using a comb-like insulating structure that combines the effects of several stents 430 in a single piece.

The cartridge 300 can be built in a variety of sizes to accommodate the maximum flow rate of exhaust gas through it in each engine application. Optimal filtration using a sintered metal fiber medium is achieved by maintaining a face velocity, or mean flow speed normal to the medium surface, of 11.0 to 13.5 cm/s. The maximum volumetric flow rate of exhaust in each engine application, divided by the optimal face velocity, sets the total required surface area of filter medium. This total area may be split among multiple cartridges 300 to maintain a manageable area of filter medium per cartridge. The dimensions of exemplary cylindrical cartridges 300 range in inner diameter from 5 cm to 20 cm, in outer diameter from 10 cm to 40 cm, and in height from 6 to 12 cm.

The mesh 400 may be of various lengths and widths to achieve the required area of filter medium per cartridge while at the same time maintaining desirable electrical properties. The electrical properties of the mesh 400 are constrained by the need to dissipate a particular power per unit area, for example 1 watt per square centimeter of medium, at a particular applied voltage. The applied voltage is dictated by the voltage available in each engine application. 12V and 24V, for example, are available on engines with alternators, while voltages exceeding 100V are available in stationary generator sets. Exemplary mesh strips 400 range in length from 100 cm to 1 m and in width from 5 cm to 12 cm. At an applied voltage of 72V, a suitable mesh 400 is 560 cm long and 7 cm wide.

The dimensions of the mesh 400, together with the intrinsic resistivity of the mesh material, determine resistance value of the mesh 400 measured between tabs 340. The mesh dimensions and resulting resistance value are chosen so that the electric power dissipated by the mesh 400 is maximized subject to the constraints of available voltage and required filtration area. For fixed voltage, power dissipation decreases, while filtration area increases, with increasing overall length of the mesh 400. An intermediate value of overall length maximizes power dissipation while providing the required filtration area for a particular engine application. One embodiment of the mesh 400, operating at an applied voltage of 100 V, dissipates 5900 W with an optimal resistance of 1.7 ohms.

Referring to FIG. 4A, the tabs 340 extend through the outer insulating block 450 in this exemplary cartridge construction. In one example of a cartridge, each tab 340 folds over and traps one end of the mesh strip 420, forming a crimped connection 470 between the tab 340 and the strip 420. The crimped connection 470 may be sandwiched between an inner insulating block 455 and the outer insulating block 450 and immobilized by tightening the screws 465.

The strip 420 is electrically insulated from all other conductive components in the cartridge, including the outer cartridge wall 315 and the cartridge bottom plate 330 shown. Insulation may be accomplished by a combination of insulating blocks 450 and 455, insulating shield 460, high temperature insulating cement 475, and air gaps 480 between the strip 420 and nearby conductors. The minimum air gap and cement thickness is determined by the voltage applied to the strip 420 and the maximum electric field that air or the cement can withstand without dielectric breakdown. Breakdown of the air or cement dielectric would lead to a spark discharge. In the example shown, the minimum cement thickness and air gap are 2 mm for operation with an applied voltage of 1 kilovolt.

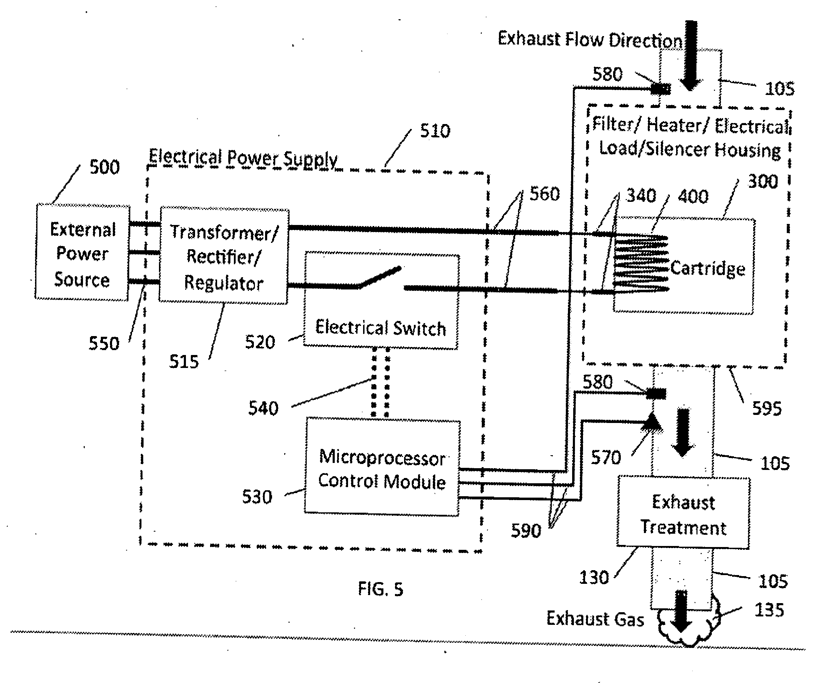

Referring to FIG. 5, the flow of electricity through the mesh 400 may be controlled by a control circuit 510 comprising at least one switch 520 connected in series between an external power source 500 and the tabs 340, in an electrical circuit comprising the mesh 400, the power regulator 515 and the switch 520. The switch 520 may be a manual switch, an electromechanical relay, or a solid state relay. In this example, the switch 520 is a solid state or electromechanical relay, controlled by a microprocessor control module 530 connected to it by a signal cable 540. By controlling the operation of the switch 520, the microprocessor control module 530 modulates the electrical power outputs 560 of the power supply 510. In other embodiments, the control circuit 510 conducts and controls the flow of electrical power from the external power source 500 to a plurality of conductive tabs 340 on a plurality of cartridges 300.

The external power source 500 may provide electricity in a variety of formats, including without limitation 600 volt alternating current 3-phase, 480 volt alternating current 3-phase, 208 volt alternating current 3 phase, 240 volt alternating current 2-phase, and 115 volt alternating current single phase. Alternating current from the external power source 500 may be stepped-down, rectified and conditioned by an optional transformer/rectifier/regulator 515. Details of such a transformer/rectifier/regulator are so well known in the art that they need not be discussed in detail herein. The output 560 of the electrical power supply 510 may be alternating or direct current and may be connected to the mesh 400 of a cartridge 300.

In an exemplary load bank system, the external power source 500 is the generator of an electrical power system that is insufficiently loaded or the propulsion electric motor of a vehicle that is braking. In either application, the resistive load of the mesh 400 safely dissipates the electrical output of the external power source 500.

In some versions of the present invention, the microprocessor control module 530 receives signals 590 that encode the absolute pressure of the exhaust gas 135 measured by two pressure transducers 580, one upstream and the other downstream of the filter/heater/electrical load/silencer housing 595. From these two signals, the microprocessor computes the differential pressure across the housing 595. In other versions, the microprocessor 530 receives a differential pressure signal directly from a differential pressure transducer, such as a P604 series transducer manufactured by CST-Kavlico, that senses exhaust pressure at locations upstream and downstream of the housing. The differential pressure computed by or transmitted to the microprocessor 530 is the engine backpressure caused by the mesh 400 and other components in the housing 595, all of which restrict the flow of exhaust gas 135.

The engine backpressure correlates to the amount of soot trapped per unit area of mesh 400. In some versions of the invention, backpressure has been observed to increase approximately 34 mbar for every added gram of soot trapped per square meter of mesh 400. The microprocessor module 530 incorporates firmware for operating on numerical values of engine backpressure, and computing from the engine backpressure the intervals at which the electrical power supply causes electrical current to flow through one or more cartridges 300, such that the mesh 400 is heated. During the heating intervals, exhaust flow through the cartridge may be restricted and the trapped soot oxidized as described in U.S. Patent No. 6,572,682.

In some versions of the present invention, the microprocessor control module 530 receives signals 590 that encode the temperature of the exhaust gas measured by a temperature transducer 570, such as a type K thermocouple, downstream of the filter/heater/electrical load/silencer housing 595. The microprocessor module 530 incorporates firmware for operating on numerical values of exhaust temperature, and computing from the exhaust temperature the intervals at which the electrical power supply causes electrical current to flow through one or more cartridges 300, such that the power dissipated into the exhaust gas 135 heats the exhaust gas to the optimum temperature for the operation of the auxiliary downstream exhaust treatment device 130 located downstream. For example, the auxiliary exhaust treatment device 130 may be a Selective Catalytic Reduction (SCR) system that removes NOx from the exhaust gas 135.

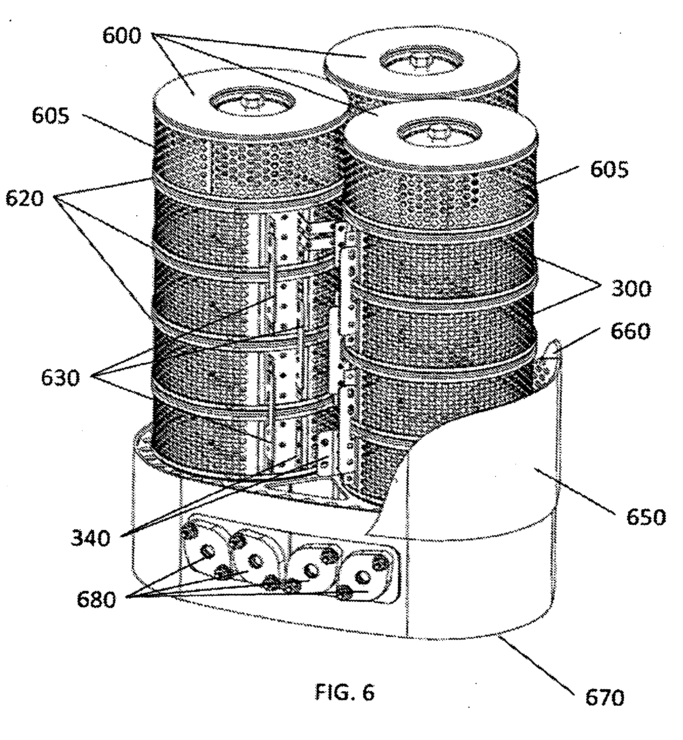

Referring to FIG. 6, a number of cartridges 300 may be physically combined in an exemplary stack 600. Each cartridge 300 is sealed against its adjacent cartridge in the axial direction by an annular gasket 620, which may be formed of high temperature resistor cement or silica fibers. The effect of the annular gaskets 620 is to prevent exhaust gas from flowing between the stack interior and the stack exterior by a path other than through the cartridges 300. The three stacks 600 are enclosed by a metal housing 650, shown partially cut away, that creates a chamber 660 bounded by the cylindrical outer surface of the stacks 600 and the inner surface of the housing 650. In this example, exhaust gas flows into the chamber 660, through the cartridges 300, and out from the stack interior through exit orifices 670.

Four of the five cartridges 300 in the exemplary stacks 600 are electrically connected in a series circuit. In this version of the invention, conductive straps 630 made of a corrosion resistant, high temperature material such as nickel are used to complete the circuit through the cartridges 300. Other versions of the invention may use high temperature cable with fiberglass or mica insulation to electrically connect multiple cartridges 300 in a circuit. Alternatively, the cartridges 300 may be connected in a parallel circuit or a combination series and parallel circuit. The number of cartridges 300 that are electrically connected in each stack 600 may vary among the stacks 600. Cartridges 605 that are not electrically connected perform individually as filters, not as heaters, but the stacks 600 as a whole nevertheless dissipate electrical energy in the exhaust gas. Electrical connections to the tabs 340 are brought outside the housing 650 through feed through openings 680 made of an insulating material such as ceramic.

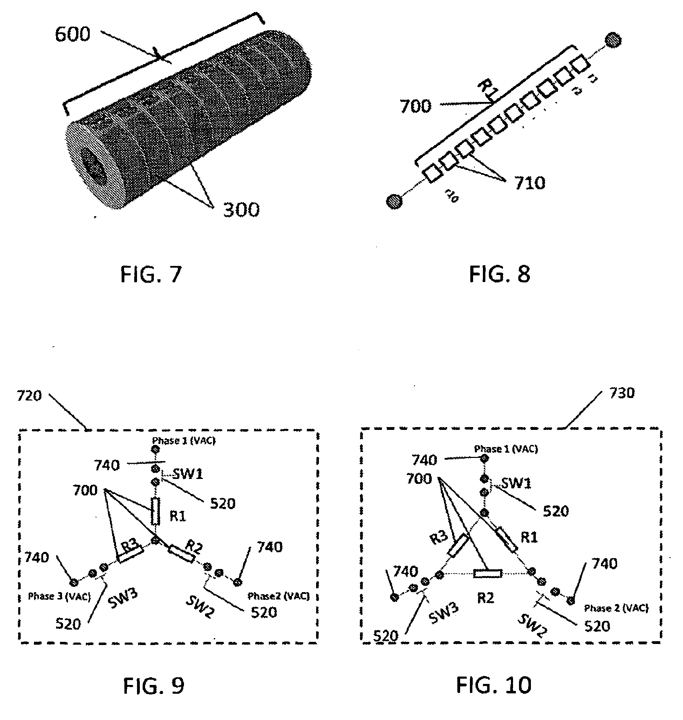

Referring to FIG. 7 and FIG. 8, several individual cartridges 300 in an exemplary stack 600 may be represented as individual resistive circuit elements 710 in an exemplary series circuit 700. If the resistances of the elements 710 are r1, r2, ..., r10, then the total resistance of the series combination is r1 + r2 + ... + r10. A cartridge may be designed to obtain an individual resistance value of between 0.15 ohm and 1.5 ohm. As in FIG. 8, a series circuit 700 may be energized with either alternating or direct current. The series circuit 700 may be combined with two other series circuits 700 in an exemplary wye configuration 720, as in FIG. 9, or an exemplary delta configuration 730, as in FIG. 10. Each leg 740 of the wye 720 or delta 730 may be connected to a separate phase output of a three phase electric power system. Each phase may be independently switched using the switches 520, but the switches may also be ganged to switch all three phases at once.

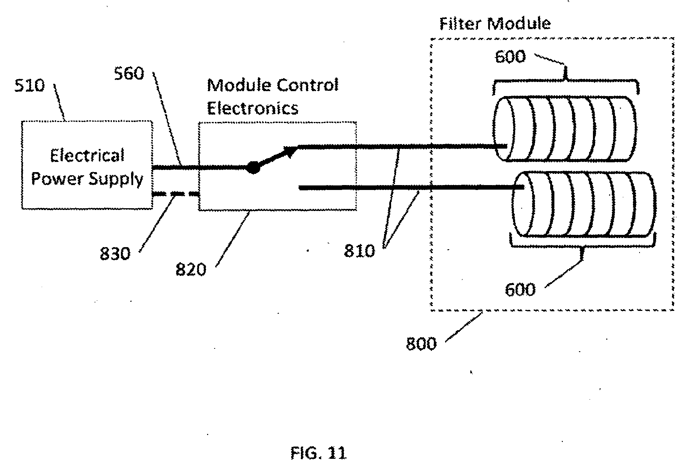

Referring to FIG. 11, two or more filter stacks 600 may be combined mechanically in one exemplary filter module 800. In the module 800, the stacks 600 would share a support structure but remain electrically independent. Some versions of the present invention comprise any number of modules 800, each of which is separately removable from the system. High temperature cables 810 separately supply electrical power to each stack 600 from the module control electronics 820.

To avoid excessive localized heating and equalize usage of the stacks 600, it is advantageous that only one stack 600 in each module 800 be powered at any one time. The module control electronics 820 incorporates an electronic circuit, well known in the prior art, that permits only one or the other, but not both, of the cables 810 to carry electrical current to a stack 600 from the electrical output 560 of the power supply 510. The optional digital control 830 may provide a serial or parallel interface to the module control electronics 820 that selects one of the stacks 600, in which case the module control electronics 820 serves as a backup device to limit the number of stacks 600 energized at one time. In other embodiments, the module control electronics 820 toggles power between the stacks 600 whenever the electrical output 560 is energized. In yet other embodiments, the module control electronics 820 is incorporated directly in the electrical power supply 510, where it performs its intended function.

## Claims

1. An apparatus for dissipating energy into the exhaust gas (135) of an internal combustion engine (100), comprising:
a housing (650) for confining a flow path for exhaust gas (135) from said internal combustion engine (100), the housing (650) having an inlet and an outlet (670), such that the exhaust gas (135) flows from the inlet to the outlet (670);
a cartridge housing (300) formed by two annular end plates (330), a perforated cylindrical outer wall (315) and perforated cylindrical inner wall (325);
a porous, electrically conductive mesh (400) placed in said cartridge housing (300), such that the exhaust gas (135) flows in through the perforations in the cylindrical outer wall (315), through the conductive mesh (400) and out through the perforations in the cylindrical inner wall (325), said conductive mesh (400) trapping the particulate matter carried by the exhaust gas (135);
at least two electrical terminals (420) that are in electrical contact with the conductive mesh (400); and
an electrical power supply (510) for completing one or more electrical circuits through the conductive mesh (400), the power supply (510) having two or more electrical outputs (560) electrically connected to an equal number of electrical terminals (420) on the conductive mesh (400),
whereby a plurality of cartridge housings (300) are arranged inside the housing (650), each of the cartridges (300) containing a section of electrically conductive mesh (400);
means for electrically insulating each section of conductive mesh (400) from the cartridge housing (300) surrounding that section;
two conductive tabs (340) attached to each cartridge housing (300), each tab (340) making electrical contact with one electrical terminal (420) on the conductive mesh (400); and
means for electrically insulating each conductive tab from its respective cartridge housing (300).

2. The apparatus of claim 1, wherein:
the electrically conductive mesh (400) comprises a sintered metal fiber fabric having high porosity, high soot holding capacity and low thermal mass, and that resists corrosion at high temperature;
the sintered metal fiber fabric comprises a plurality of layers, each layer containing fibers of a different diameter, such that the fabric traps and removes particulate matter from the exhaust gas flowing through the fabric;
and
each section of sintered metal fiber fabric has a resistance value, measured between the two conductive tabs (340) in electrical contact with that section, that causes the maximum electrical power to be dissipated in that section, within any electrical current and voltage constraints of the electrical power supply outputs.

3. The apparatus of claim 2, further comprising a plurality of series cartridge combinations formed by electrically connecting the conductive tabs (340) of groups of two or more cartridges (300), leaving two conductive tabs (340) in each series cartridge combination unconnected, such that electricity flows in series through every section of sintered metal fiber fabric in each series cartridge combination when a voltage is applied between the two unconnected tabs (340) of that combination; and
means for making the electrical connections among the conductive tabs (340) of the cartridges (300) in each series cartridge combination.

4. The apparatus of claim 3, wherein the sintered metal fiber fabric is coated with a catalyst for reducing the temperature at which any soot trapped by the fabric is oxidized.

5. The apparatus of claim 3, wherein:
each one of at least three series cartridge combinations is electrically connected to two other series cartridge combinations, such that each electrically connected set of three series cartridge combinations forms a wye circuit; and
the electrical outputs of the power supply (510) comprise three phase alternating current outputs.

6. The apparatus of claim 5, wherein the sintered metal fiber fabric is coated with a catalyst that performs selective catalytic reduction of nitrogen oxides in the exhaust gas.

7. An apparatus according to claim 3, wherein the electrical power supply (510) comprises:
a control circuit (510) that conducts and controls the flow of electrical power from an external power source (500) to the plurality of conductive tabs (340), the control circuit (510) including one or more switches (520), such that each switch (520) can interrupt the flow of electricity from the external power source (500) to one or more of the series cartridge combinations; and
a microprocessor control module (530) that is electrically connected to the electrical power supply (510), such that the microprocessor control module (530) controls the operation of the switches (520), thereby modulating the electrical power outputs of the power supply connected to the conductive tabs.

8. The apparatus of claim 7, wherein the microprocessor control module (530) comprises firmware for operating on numerical values of exhaust temperature, and computing from the exhaust temperature the intervals at which the electrical power supply (510) causes electrical current to flow through one or more series cartridge combinations, such that the power dissipated into the exhaust gas (135) heats the exhaust gas (135) to the optimum temperature for the operation of an emissions reduction component (130) through which the exhaust gas (135) flows.

9. Use of an apparatus according to anyone of claims 1 to 8, comprising the steps of:
driving a generator (145, 500) with the mechanical output of the internal combustion engine (100);
conducting the electrical output of the generator (145, 500) to the electrical terminals (420) of the conductive mesh (400);
electrically heating the conductive mesh (400);
controlling the electrical potential across the electrical terminals (420), thereby varying the flow of electricity through the conductive mesh (400); and
dissipating a selectable amount of power in the conductive mesh (400).

10. The use of claim 9, wherein the generator (145, 500) is a propulsion electric motor in a diesel electric powered vehicle, such that the electric motor generates electricity when the vehicle is braking or under no load.

11. The use of claim 9, further comprising the step of:
selecting the amount of power dissipated in a sintered metal fiber fabric such that the selected amount of power heats the exhaust gas (135) to the optimum temperature for the operation of an emissions reduction component (130) through which the exhaust gas (135) flows.

## Patentansprüche

1. Vorrichtung zum Ableiten von Energie in das Abgas (135) einer Brennkraftmaschine (100), die umfasst:
ein Gehäuse (650) zum Einschränken eines Strömungspfades für Abgas (135) von der Brennkraftmaschine (100), wobei das Gehäuse (650) einen Einlass und einen Auslass (670) aufweist, so dass das Abgas (135) vom Einlass zum Auslass (670) strömt;
ein Kassettengehäuse (300), das durch zwei ringförmige Endplatten (330), eine perforierte zylindrische Außenwand (315) und eine perforierte zylindrische Innenwand (325) gebildet ist;
ein poröses, elektrisch leitfähiges Netz (400), das im Kassettengehäuse (300) angeordnet ist, so dass das Abgas (135) durch die Perforationen in der zylindrischen Außenwand (315) hinein, durch das leitfähige Netz (400) und durch die Perforationen in der zylindrischen Innenwand (325) nach außen strömt, wobei das leitfähige Netz (400) das Partikelmaterial, das vom Abgas (135) getragen wird, einfängt;
mindestens zwei elektrische Anschlüsse (420), die mit dem leitfähigen Netz (400) in elektrischem Kontakt stehen; und
eine elektrische Leistungsversorgung (510) zum Vervollständigen von einer oder mehreren elektrischen Schaltungen durch das leitfähige Netz (400), wobei die Leistungsversorgung (510) zwei oder mehr elektrische Ausgänge (560) aufweist, die mit einer gleichen Anzahl von elektrischen Anschlüssen (420) am leitfähigen Netz (400) elektrisch verbunden sind,
wodurch eine Vielzahl von Kassettengehäusen (300) innerhalb des Gehäuses (650) angeordnet ist, wobei jede der Kassetten (300) einen Abschnitt des elektrisch leitfähigen Netzes (400) enthält;
Einrichtungen zum elektrischen Isolieren jedes Abschnitts des leitfähigen Netzes (400) vom Kassettengehäuse (300), das diesen Abschnitt umgibt;
zwei leitfähige Ansätze (340), die an jedem Kassettengehäuse (300) befestigt sind, wobei jeder Ansatz (340) einen elektrischen Kontakt mit einem elektrischen Anschluss (420) am leitfähigen Netz (400) herstellt; und
Einrichtungen zum elektrischen Isolieren jedes leitfähigen Ansatzes von seinem jeweiligen Kassettengehäuse (300).

2. Vorrichtung nach Anspruch 1, wobei:
das elektrisch leitfähige Netz (400) ein Fasergewebe aus gesintertem Metall mit hoher Porosität, hoher Rußhaltekapazität und geringer thermischer Masse, das Korrosion bei hoher Temperatur standhält, umfasst;
das Fasergewebe aus gesintertem Metall eine Vielzahl von Schichten umfasst, wobei jede Schicht Fasern mit einem unterschiedlichen Durchmesser enthält, so dass das Gewebe Partikelmaterial vom Abgas, das durch das Gewebe strömt, einfängt und entfernt; und
jeder Abschnitt des Fasergewebes aus gesintertem Metall einen Widerstandswert, der zwischen den zwei leitfähigen Ansätzen (340) in elektrischem Kontakt mit diesem Abschnitt gemessen ist, der bewirkt, dass die maximale elektrische Leistung in diesem Abschnitt abgeleitet wird, innerhalb irgendwelcher elektrischer Strom- und Spannungseinschränkungen der elektrischen Leistungsversorgungsausgänge aufweist.

3. Vorrichtung nach Anspruch 2, die ferner eine Vielzahl von Reihenkassettenkombinationen umfasst, die durch elektrisches Verbinden der leitfähigen Ansätze (340) von Gruppen von zwei oder mehr Kassetten (300) gebildet sind, wobei zwei leitfähige Ansätze (340) in jeder Reihenkassettenkombination unverbunden belassen sind, so dass die Elektrizität in Reihe durch jeden Abschnitt des Fasergewebes aus gesintertem Metall in jeder Reihenkassettenkombination fließt, wenn eine Spannung zwischen den zwei unverbundenen Ansätzen (340) dieser Kombination angelegt wird; und
Einrichtungen zum Herstellen der elektrischen Verbindungen zwischen den leitfähigen Ansätzen (340) der Kassetten (300) in jeder Reihenkassettenkombination.

4. Vorrichtung nach Anspruch 3, wobei das Fasergewebe aus gesintertem Metall mit einem Katalysator zum Verringern der Temperatur beschichtet ist, bei der irgendein durch das Gewebe eingefangener Ruß oxidiert wird.

5. Vorrichtung nach Anspruch 3, wobei:
jede von mindestens drei Reihenkassettenkombinationen mit zwei anderen Reihenkassettenkombinationen elektrisch verbunden ist, so dass jeder elektrisch verbundene Satz von drei Reihenkassettenkombinationen eine Ypsilonschaltung bildet; und
die elektrischen Ausgänge der Leistungsversorgung (510) Dreiphasen-Wechselstromausgänge umfassen.

6. Vorrichtung nach Anspruch 5, wobei das Fasergewebe aus gesintertem Metall mit einem Katalysator beschichtet ist, der eine selektive katalytische Reduktion von Stickoxiden im Abgas durchführt.

7. Vorrichtung nach Anspruch 3, wobei die elektrische Leistungsversorgung (510) umfasst:
eine Steuerschaltung (510), die den Fluss von elektrischer Leistung von einer externen Leistungsquelle (500) zu der Vielzahl von leitfähigen Ansätzen (340) leitet und steuert, wobei die Steuerschaltung (510) einen oder mehrere Schalter (520) umfasst, so dass jeder Schalter (520) den Fluss von Elektrizität von der externen Leistungsquelle (500) zu einer oder mehreren der Reihenkassettenkombinationen unterbrechen kann; und
ein Mikroprozessor-Steuermodul (530), das mit der elektrischen Leistungsversorgung (510) elektrisch verbunden ist, so dass das Mikroprozessor-Steuermodul (530) die Operation der Schalter (520) steuert, wodurch die elektrischen Leistungsausgänge der mit den leitfähigen Ansätzen verbundenen Leistungsversorgung moduliert wird.

8. Vorrichtung nach Anspruch 7, wobei das Mikroprozessor-Steuermodul (530) eine Firmware zum Verarbeiten von Zahlenwerten der Abgastemperatur und Berechnen der Intervalle, in denen die elektrische Leistungsversorgung (510) bewirkt, dass ein elektrischer Strom durch eine oder mehrere Reihenkassettenkombinationen fließt, aus der Abgastemperatur umfasst, so dass die in das Abgas (135) abgeleitete Leistung das Abgas (135) auf die optimale Temperatur für den Betrieb einer Emissionsverringerungskomponente (130) erhitzt, durch die das Abgas (135) strömt.

9. Verwendung einer Vorrichtung nach einem der Ansprüche 1 bis 8 mit den Schritten:
Ansteuern eines Generators (145, 500) mit der mechanischen Ausgabe der Brennkraftmaschine (100);
Leiten der elektrischen Ausgabe des Generators (145, 500) zu den elektrischen Anschlüssen (420) des leitfähigen Netzes (400);
elektrisches Erhitzen des leitfähigen Netzes (400);
Steuern des elektrischen Potentials über den elektrischen Anschlüssen (420), wodurch der Fluss von Elektrizität durch das leitfähige Netz (400) verändert wird; und
Ableiten einer auswählbaren Menge an Leistung im leitfähigen Netz (400).

10. Verwendung nach Anspruch 9, wobei der Generator (145, 500) ein Antriebselektromotor in einem elektrisch betriebenen Dieselfahrzeug ist, so dass der Elektromotor Elektrizität erzeugt, wenn das Fahrzeug bremst oder unter keiner Last steht.

11. Verwendung nach Anspruch 9, die ferner den Schritt umfasst:
Auswählen der Menge an Leistung, die in einem Fasergewebe aus gesintertem Metall abgeleitet wird, so dass die ausgewählte Menge an Leistung das Abgas (135) auf die optimale Temperatur für den Betrieb einer Emissionsverringerungskomponente (130) erhitzt, durch die das Abgas (135) strömt.

## Revendications

1. Appareil, destiné à dissiper de l'énergie dans le gaz d'échappement (135) d'un moteur à combustion interne (100), comprenant :
un boîtier (650), destiné à confiner un trajet de circulation du gaz d'échappement (135) depuis ledit moteur à combustion interne (100), le boîtier (650) ayant une entrée et une sortie (670), de sorte que le gaz d'échappement (135) circule depuis l'entrée vers la sortie (670) ;
un boîtier de cartouche (300), formé par deux plaques d'extrémité annulaires (330), une paroi extérieure cylindrique perforée (315) et une paroi intérieure cylindrique perforée (325) ;
un maillage poreux, électriquement conducteur (400), placé dans ledit boîtier de cartouche (300), de sorte que le gaz d'échappement (135) circule au-dedans à travers les perforations dans la paroi extérieure cylindrique (315), à travers le maillage conducteur (400) et au dehors à travers les perforations dans la paroi interne cylindrique (325), ledit maillage conducteur (400) piégeant la matière particulaire, acheminée par le gaz d'échappement (135) ;
au moins deux bornes électriques (420) qui sont en contact électrique avec le maillage conducteur (400) et
une alimentation électrique (510), destinée à compléter un ou plusieurs circuits électriques à travers le maillage conducteur (400), l'alimentation électrique (510) ayant deux sorties électriques (560) ou plus, reliées électriquement à un nombre identique de bornes électriques (420) sur le maillage conducteur (400),
moyennant quoi une pluralité de boîtiers de cartouche (300) est agencée à l'intérieur du boîtier (650), chacune des cartouches (300) contenant une section de maillage électriquement conducteur (400) ;
des moyens, destinés à isoler électriquement chaque section du maillage conducteur (400) du boîtier de cartouche (300) entourant cette section ;
deux pattes conductrices (340) étant fixées à chaque boîtier de cartouche (300), chaque patte (340) faisant contact électrique avec une borne électrique (420) sur le maillage conducteur (400) et
des moyens étant destinés à isoler électriquement chaque patte conductrice de son boîtier de cartouche (300) respectif.

2. Appareil selon la revendication 1, dans lequel
le maillage électriquement conducteur (400) comprend un tissu à fibre en métal fritté, ayant une forte porosité, une forte capacité de retenue de suie et une masse thermique faible et qui résiste à la corrosion à haute température ;
le tissu à fibre en métal fritté comprend une pluralité de couches, chaque couche contenant des fibres de différents diamètres, de sorte que le tissu piège et enlève la matière particulaire du gaz d'échappement qui circule à travers le tissu
et
chaque section de tissu à fibre en métal fritté a une valeur ohmique, mesurée entre les deux pattes conductrices (340) en contact électrique avec cette section, qui amène le courant électrique maximum à être dissipé dans cette section, dans les limites de toutes contraintes de courant électrique et de tension des sorties d'alimentation en courant électrique.

3. Appareil selon la revendication 2, comprenant en outre
une pluralité de combinaisons de cartouches en série, formées en reliant électriquement les pattes conductrices (340) de groupes de deux cartouches (300) ou plus, en laissant non reliées deux pattes conductrices (340) dans chaque combinaison de cartouches en série, de sorte que l'électricité circule en série à travers chaque section du tissu à fibre en métal fritté dans chaque combinaison de cartouches en série, lorsqu'une tension est appliquée entre les deux pattes (340) non reliées de cette combinaison et
des moyens, destinés à établir les connexions électriques parmi les pattes conductrices (340) des cartouches (300) dans chaque combinaison de cartouches en série.

4. Appareil selon la revendication 3, dans lequel le tissu à fibre en métal fritté est revêtu d'un catalyseur, destiné à réduire la température à laquelle est oxydée toute suite, piégée par le tissu.

5. Appareil selon la revendication 3, dans lequel
chacune des au moins trois combinaisons de cartouches en série est reliée électriquement aux deux autres combinaisons de cartouches en série, de sorte que chaque jeu électriquement relié de trois combinaisons de cartouches en série forme un circuit en triangle et
les sorties électriques de l'alimentation électrique (510) comprennent des sorties de courant alternatif triphasé.

6. Appareil selon la revendication 5, dans lequel le tissu à fibre en métal fritté est revêtu d'un catalyseur, qui exécute une réduction catalytique sélective d'oxydes d'azote dans le gaz d'échappement.

7. Appareil selon la revendication 3, dans lequel l'alimentation électrique (510) comprend :
un circuit de commande (510), qui conduit et commande la circulation du courant électrique depuis une source extérieure de courant (500) vers la pluralité de pattes conductrices (340), le circuit de commande (510) comportant un ou plusieurs commutateurs (520), de sorte que chaque commutateur (520) peut interrompre la circulation d'électricité depuis la source extérieure de courant (500) vers une ou plusieurs des combinaisons de cartouches en série et
un module de commande de microprocesseur (530), qui est relié électriquement à l'alimentation électrique (510), de sorte que le module de commande de microprocesseur (530) commande le fonctionnement des commutateurs (520), modulant par ce moyen les sorties de courant électrique de l'alimentation électrique reliées aux pattes conductrices.

8. Appareil selon la revendication 7, dans lequel le module de commande de microprocesseur (530) comprend un micrologiciel, destiné à fonctionner sur des valeurs numériques de température d'échappement et à calculer, à partir de la température d'échappement, les intervalles auxquels l'alimentation électrique (510) amène le courant électrique à circuler à travers une ou plusieurs combinaisons de cartouches en série, de sorte que le courant, dissipé dans le gaz d'échappement (135) chauffe le gaz d'échappement (135) à la température optimale pour le fonctionnement d'un composant de réduction d'émissions (130), à travers lequel circule le gaz d'échappement (135).

9. Utilisation d'un appareil selon l'une quelconque des revendications 1 à 8, comprenant les étapes consistant à
entraîner un générateur (145, 500) avec la sortie mécanique du moteur à combustion interne (100) ;
diriger la sortie électrique du générateur (145, 500) vers les bornes électriques (420) du maillage conducteur (400) ;
chauffer électriquement le maillage conducteur (400) ;
commander le potentiel électrique dans les bornes électriques (420), faisant varier par ce moyen la circulation d'électricité à travers le maillage conducteur (400) et
dissiper une quantité sélectionnable de courant dans le maillage conducteur (400).

10. Utilisation selon la revendication 9, dans lequel le générateur (145, 500) est un moteur à propulsion électrique dans un véhicule électrique - diesel, de sorte que le moteur électrique produit de l'électricité, lorsque le véhicule freine ou circule à charge nulle.

11. Utilisation selon la revendication 9, comprenant en outre l'étape consistant à
sélectionner la quantité de courant dissipé dans un tissu à fibre en métal fritté, de sorte que la quantité sélectionnée de courant chauffe le gaz d'échappement (135) à la température optimale pour le fonctionnement d'un composant de réduction d'émissions (130) à travers lequel circule le gaz d'échappement (135).
